# EUROPÄISCHE PATENTSCHRIFT

(11) **EP 1 762 548 B1**
(45) Veröffentlichungstag und Bekanntmachung des Hinweises auf die Patenterteilung: **07.12.2011**
(21) Anmeldenummer: 06017719.3
(22) Anmeldetag: 25.08.2006
(51) Int. Cl.: C03B 5/26, F27D 3/15

(54) **Drainagevorrichtung für einen Glasschmelzofen**
Glass melting furnace bottom outlet
Ouvreau de fond d'un four de verrerie

(30) Priorität: 08.09.2005 DE 102005042864
(43) Veröffentlichungstag der Anmeldung: 14.03.2007
(73) Patentinhaber: Horn Glass Industries AG, 95703 Ploßberg (DE)
(72) Erfinder: Jatzwauk, Christoph, 92637 Weiden (DE); Schnorr, Martin, 95703 Plössberg (DE); Haberkorn, Roland, 95703 Plössberg (DE); Karwath, Jürgen, 92670 Windischeschenbach (DE); Frank, Markus, 95643 Tischenreuth (DE); Frank, Hubert, 95643 Tirchenreuth (DE)
(74) Vertreter: Blaumeier, Jörg

(56) Entgegenhaltungen:
- EP-A- 0 842 903
- EP-A1- 0 329 930
- DD-A1- 229 985
- DE-A1- 3 906 270
- DE-A1- 4 005 746
- JP-A- 1 045 728
- JP-A- 57 022 123
- US-A- 4 402 724
- US-A- 4 565 559

## Beschreibung

Die Erfindung betrifft eine Drainagevorrichtung für einen Glasschmelzofen zum Ablassen flüssigen Glases aus einer im Ofenboden vorgesehenen Bohrung, umfassend eine Heizeinrichtung.

Über solche Drainagevorrichtungen ist es möglich, häufig auftretende, unerwünsche Schlieren, die durch Lösungserscheinungen des eingesetzten feuerfesten Materials in der Schmelzwanne, der Arbeitswanne oder dem Vorherd entstehen, zu drainieren. über eine Bohrung im Ofenboden kann über die Drainagevorrichtung schlieriges Bodenglas bei Bedarf abgelassen werden, so dass dieses nicht zu den nachverarbeitenden Einrichtungen gelangt. Neben dem Ablass schlieriger Glasschmelze ist es aber auch denkbar, definiert größere Mengen Glas zu drainieren, um z. B. Umfärbvorgänge in Färbevorherden oder dergleichen zu beschleunigen.

Eine bekannte Drainagevorrichtung besteht aus zwei Elektroden, von denen eine außenseitig am Ofenboden im Bereich der Bohrung angeordnet ist, während die andere Gegenelektrode im Inneren des Ofens vorgesehen ist. Zwischen den beiden Elektroden fließt über die erstarrte Glasmasse, die, wenn nicht drainiert wird, die Bohrung verschießt, ein über die Elektroden angelegter Strom, der die feste Glasmasse aufschmelzt. Eine solche Drainagevorrichtung ist aus EP 0 329 930 A1 bekannt

Diese Drainagevorrichtung ist insofern nachteilig, als zu ihrem Betrieb zwingend eine im Ofeninneren vorgesehene Gegenelektrode erforderlich ist. Zur Installation bzw. zu Wartungszwecken in diesem Bereich ist also stets der Ofen herunterzufahren, damit man an diesen Bereich gelangt.

Der Erfindung liegt damit das Problem zugrunde, eine demgegenüber einfach aufgebaute Drainagevorrichtung anzugeben.

Zur Lösung dieses Problems ist eine Drainagevorrichtung vorgesehen, die sich durch eine am Ofenboden anzulegende Heizplatte mit einer in der Montagestellung mit der Bohrung im Ofenboden korrespondierenden Durchbrechung, aus der beim Ablassen geschmolzene Glasmasse unmittelbar abtropft, wobei die Heizeinrichtung ein der Heizplatte nachgeschaltetes Heizelement in Form eines Widerstandsheizers zum Aufheizen der Heizplatte umfasst, auszeichnet.

über die erfindungsgemäß vorgesehene Heizplatte, die unmittelbar am Ofenboden, dessen Bohrung umgebend, angeordnet ist, nebst der ihr nachgeschalteten Heizeinrichtung erfolgt der Wärmeeintrag zum Aufschmelzen des die Bohrung verschließenden Glaspfropfens ausschließlich von außen über die Flächenheizung, nämlich die Heizplatte. Hierüber kann genügend Wärme eingetragen werden, dass sich der Glaspfropfen erwärmt und - unterstützt vom Wärmefluss vom Ofen her - in relativ kurzer Zeit aufschmilzt. Die erfindungsgemäße Drainagevorrichtung arbeitet also ausschließlich von außerhalb des Ofens bzw. des Bodens, irgendwelche im Offeninneren zu integrierenden Elemente sind hier nicht vorgesehen.

Die Heizplatte selbst ist eine hochtemperaturbeständige Metallplatte, bevorzugt eine Inconell-Platte, die bis Temperaturen von 1.300° C oder mehr hitzefest ist. Dies ist erforderlich, da die Heizplatte sehr stark aufzuheizen ist und, wenn der Glaspfropfen aufgeschmolzen ist, die schlierige Glasschmelze durch die Durchbrechung in der Heizplatte hindurchströmt.

Das Heizelement selbst ist ein Widerstandsheizer, der durch Anlegen eines elektrischen Stroms auf die entsprechende Temperatur aufgeheizt werden kann. Die thermische Kopplung des Widerstandsheizers mit der Heizplatte ist möglichst eng zu wählen, das heißt, die Heizplatte sollte möglichst nah am Heizelement angeordnet sein.

Während das Heizelement bzw. der Widerstandsheizer als Flächenheizer ausgeführt sein kann, der durchaus auch unmittelbar auf der flächigen Unterseite der Heizplatte angeordnet sein kann, sieht eine vorteilhafte Erfindungsausgestaltung vor, das Heizelement als schraubenförmige Wendel auszubilden, durch die das abfließende Glas strömt. Diese Heizwendel hat eine bestimmte Länge, mithin kann also über diese Länge auch eine entsprechend hohe Temperatur gehalten werden. Dies ermöglicht es, sicherzustellen, dass das abfließende Glas sofort nach dem Austritt aus dem Ofenboden hinter der Heizplatte erstarrt, sondern im schmelzflüssigen Zustand in jedem Fall bis hinter die erfindungsgemäße Drainagevorrichtung gelangt.

Das Heizelement, insbesondere die Wendel, ist bevorzugt an oder in einem Tragrohr, insbesondere einem Keramikrohr bevorzugt aus einer Faserkeramik, gehaltert, so dass sich eine stabile, geschlossene Ausgestaltung ergibt.

Um die Möglichkeit zu geben, den Glasstrom variieren zu können, bietet sich neben der Temperaturregelung und/oder einer Kühlung, worauf nachfolgend noch eingegangen wird, ferner die Möglichkeit an, eine Stromregulierung über die Größe der plattenseitigen Ausnehmung vorzunehmen. Diese kann natürlich im Querschnitt kleiner als die Ofenbodenbohrung gewählt werden, so dass dieser Querschnitt flussbestimmend ist. Um die Vorrichtung möglichst variabel auszugestalten, kann in der Heizplatte eine Ausnehmung zur Aufnahme eines die Durchbrechung aufweisenden Platteneinsatzes vorgesehen sein. Dieser Einsatz kann je nach Bedarf ausgetauscht werden, mithin kann also bedarfsweise der Querschnitt der Ausnehmung variiert werden, um so den Glasfluss über diesen Parameter variieren zu können bzw. den Bedürfnissen und Gegebenheiten anpassen zu können.

Eine besonders vorteilhafte Erfindungsausgestaltung sieht wenigstens eine Kühleinrichtung zum Kühlen der Heizplatte und/oder der Heizeinrichtung vor. Über diese Kühlung kann in Verbindung mit der Temperaturregelung der Beheizung der Glassfluss bzw. Durchsatz variiert werden, nachdem hierüber eine sehr exakte Temperaturregelung erfolgen und relativ schnell ein gegebenenfalls auch nur teilweises Zusetzen der Ofenbohrung bis hin zum vollständigen Unterbrechen erreicht werden kann. Eine abgeschaltete Beheizung in Verbindung mit der vollen Kühlleistung reicht aus, um den Glasfluss innerhalb von sehr wenigen Minuten einzufrieren.

Die Kühleinrichtung selbst kann nach einer ersten Ausgestaltung eine oder mehrere Kühlluftleitungen umfassen, die die Kühlluft, die über ein entsprechendes Gebläse zugeführt wird, in den Bereich der Heizplatte und/oder der Heizeinrichtung ausblasen. Als Kühlluft kann ohne weiteres Raumluft verwendet werden, die im Hinblick auf die im Bereich der Auslassbohrung herrschenden hohen Temperaturen sehr kühl ist. Bevorzugt kommen mehrere Kühlluftleitungen zum Einsatz, die um die bevorzugte rotationssymmetrische Heizplatte bzw. Heizeinrichtung verteilt angeordnet sind.

Alternativ oder zusätzlich zum Einsatz von Kühlluftleitungen kann die Kühleinrichtung eine oder mehrere separate, die Heizplatte und/oder die Heizeinrichtung umgreifende Kühlmittelleitungen umfassen. Diese Kühlmittelleitungen, die bevorzugt mit Wasser gespeist werden, bewirken ebenso eine hinreichende Kühlung und einen schnellen Wärmetransport. Die bevorzugt eingesetzten mehreren Kühlmittelleitungen verlaufen - bezogen auf eine vertikale Montagestellung der Drainagevorrichtung - übereinander angeordnet und können separat mit Kühlmittel beaufschlagt werden, so dass auch eine variierende lokale Kühlung im Bereich der Heizeinrichtung bzw. des Heizelements möglich ist.

Für einen einfachen Aufbau der Drainagevorrichtung und für eine einfache Montage derselben weist sie zweckmäßigerweise ein Traggestell auf, über das sie am Ofenboden montierbar ist. Dies Traggestell besitzt bevorzugt ein oder mehrere Federspannelemente, über die die Heizeinrichtung samt Heizplatte gegen den Ofenboden spannbar ist. Die Heizeinrichtung nebst Heizplatte sowie gegebenenfalls die Kühleinrichtungen werden bevorzugt auf eine Aufbauplatte, die Teil des Traggestells ist, aufgebaut, wonach das Traggestell am Ofenboden befestigt wird. Über die Federspannelemente wird das Traggestell bzw. die Aufbauplatte samt Heizeinrichtung und Heizplatte automatisch gegen den Ofenboden gespannt.

Neben der Drainagevorrichtung selbst betrifft die Erfindung ferner einen Glasschmelzofen, umfassend eine Drainagevorrichtung der beschriebenen Art.

Weitere Vorteile, Merkmale und Einzelheiten der Erfindung ergeben sich aus den im folgenden beschriebenen Ausführungsbeispielen sowie anhand der Zeichnungen. Dabei zeigen:
- Fig. 1: eine Prinzipdarstellung einer erfindungsgemäßen Drainagevorrichtung einer ersten Ausführungsform, und
- Fig. 2: eine Prinzipdarstellung einer erfindungsgemäßen Drainagevorrichtung einer zweiten Ausführungsform.

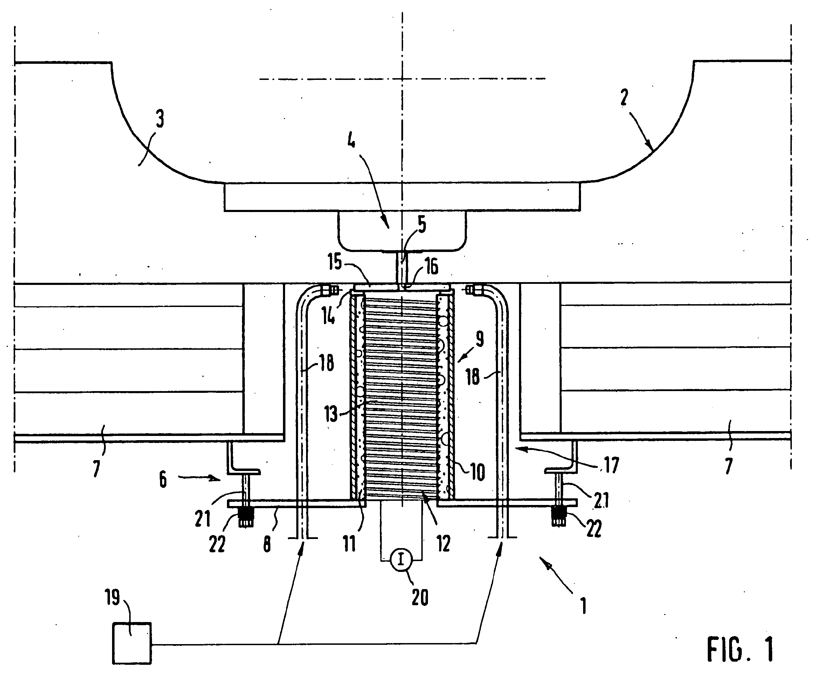

Fig. 1 zeigt in Form einer Prinzipdarstellung eine erfindungsgemäße Drainagevorrichtung 1, die an der Unterseite des Bodens 2 eines Glasschmelzofens, beispielsweise im Bereich des Vorherds vor dem Spout angeordnet ist. In diesem Bereich befindet sich ein Drainagestein 3 aus feuerfestem Material, der eine der Drainage dienende Vertiefung aufweist, in der sich ankommendes, unerwünschte Schlieren aufweisendes geschmolzenes Glasmaterial aufgrund seines höheren spezifischen Gewichts sammelt. Die Vertiefung 4 mündet in einer Bohrung 5, über die bei Bedarf das sich in diesem Bereich ansammelnde Schmelzmaterial abgelassen werden kann. Diesem Zweck dient die Drainagevorrichtung 1, die dazu dient, reversibel den im normalen Betrieb die Bohrung verschließenden Glaspfropfen aus erstarrter Glasmasse zum Abziehen der Glasschmelze aufzuschmelzen.

Die erfindungsgemäße Drainagevorrichtung 1 umfasst ein Traggestell 6, mit dem sie im gezeigten Beispiel an ofenbodenseitig verlaufenden Querträgern 7 befestigt ist. Das Traggestell 6 umfasst ferner eine Aufbauplatte 8, auf der eine Heizeinrichtung 9 aufgebaut ist. Diese Heizeinrichtung 9 umfasst ein äußeres Verkleidungsrohr 10, in dessen Inneren ein Tragrohr 11, bevorzugt ein Keramikrohr aus Faserkeramik, angeordnet ist. Dieses Tragrohr dient zum Haltern eines Heizelements 12, hier in Form eines wendelförmigen Widerstandsheizers 13. Dieser erstreckt sich bis in den Bereich des oberen Endes des Tragrohrs 11. Am oberen Ende des Tragrohrs 11 ist, unter Zwischenschaltung eines Halterings 14, eine Heizplatte 15 bevorzugt aus hochtemperaturfestem Stahl angeordnet. Diese weist eine Ausnehmung 16 auf, die mit der Bohrung 5 im Ofenboden korrespondiert. Die Heizplatte 15 liegt, wie Fig. 1 anschaulich zeigt, großflächig an der Unterseite des O-fenbodens 2 im unmittelbaren Bereich der Bohrung 5 an. In diesem Bereich kann über eine Kühleinrichtung 17, hier in Form zweier Kühlluftleitungen 18, die über ein Gebläse 19 mit Luft versorgt werden, eben diese Kühlluft zum lokalen Kühlen ausgeblasen werden.

Soll nun Glasmasse abgezogen werden, ist es erforderlich, den die Bohrung 5 zusetzenden, erstarrten Glaspfropfen aufzuschmelzen. Hierzu wird das wendelförmige Heizelement 13 bestromt, wozu dieses mit einer Stromquelle 20 verbunden ist. Über den Widerstandsheizer 13 wird gleichzeitig die unmittelbar benachbarte Heizplatte 15 erhitzt, die die thermische Energie in den Glasboden und damit in das erstarrte, die Bohrung 5 zusetzende Glasmaterial einträgt. Zu Beginn dieses Beheizungsvorgangs herrschen im Bereich der Heizplatte 15 Temperaturen zwischen 250 - 300° C. Ab einer Temperatur von 900 - 950° C schmilzt der Glaspfropfen in der Bohrung 5 langsam auf, es kommt zur ersten Tropfenbildung, welche Tropfen durch die Ausnehmung 16 und den wendelartigen Widerstandsheizers 13 nach unten in eine Auffangwanne tropfen. Mit zunehmender Temperatur schmilzt der zusetzende Glaspfropfen immer weiter auf, mithin nimmt auch der Glasfluss zu. Das Aufschmelzen findet mit zunehmendem Glasfluss immer schneller statt, nachdem über die abfließende heiße Glasmasse zusätzlich thermische Energie in den noch erstarrten Teil des Glases in der Bohrung 5 eingetragen wird.

Der Durchsatz der Drainage ist insgesamt sowohl von der Glasart, der Glasfarbe und der Glastemperatur im entsprechenden Ofenbereich, wo die Drainagevorrichtung 1 positioniert ist, als auch vom Querschnitt der Ausnehmung 16 in der Heizplatte 15 abhängig, wobei der Ausnehmungsquerschnitt auf die gewünschten Gegebenheiten abgestimmt werden kann. Die Heizplatte 15 ist ohne weiteres austauschbar. Der Ausnehmungsquerschnitt bestimmt den maximalen Durchsatz, wobei die Menge durch die Beheizung über Temperaturregelung und/oder Kühlung der Platte über die Kühleinrichtung 17 reguliert werden kann.

Zum Beenden des Glasschmelzabzugs wird die Beheizung ausgeschaltet, gegebenenfalls wird, sofern noch nicht erfolgt, Kühlluft ausgeblasen, so dass sich innerhalb sehr kurzer Zeit im Bereich einiger Minuten in der Bohrung 5 wiederum ein Glaspfropfen bildet, der diese dicht verschließt.

Während zur Befestigung der Drainagevorrichtung 1 die Aufbauplatte 8 grundsätzlich über Befestigungsschrauben auf entsprechende Streben 21 der Tragvorrichtung 6 aufgeschraubt werden kann, ist es zweckmäßig, in diesem Bereich Federspannelemente 22 vorzusehen, die an einem endseitigen Lager der Streben 21 gegengelagert von unten gegen die Aufbauplatte 8 drücken und diese mitsamt der aufgebauten Heizeinrichtung 9 und Kühlluftleitungen 18 nach oben drücken, so dass die Heizplatte 15 in Anlage zum Ofenboden kommt.

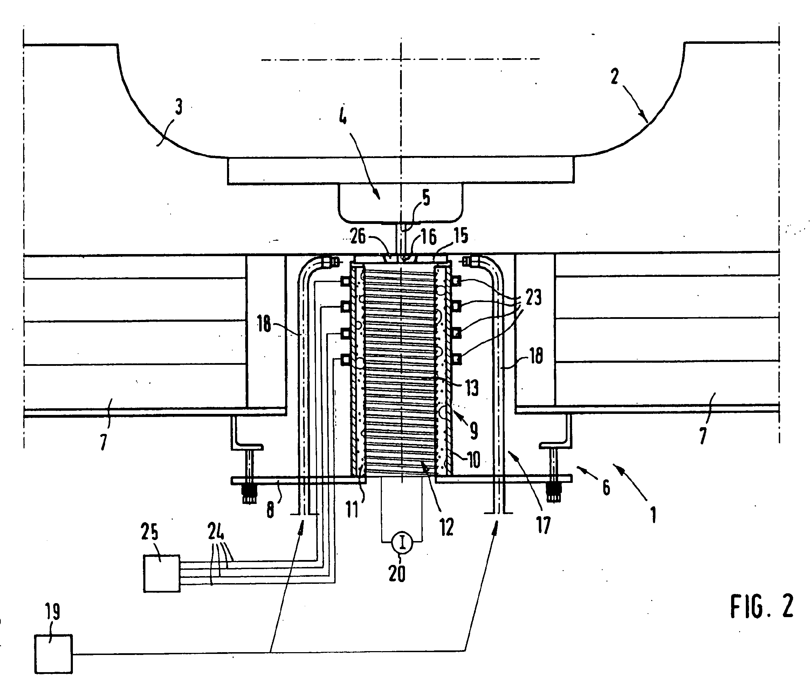

Eine gegenüber der Ausführung gemäß Fig. 1 ergänzte Ausführungsform einer Drainagevorrichtung 1 zeigt Fig. 2. Diese entspricht in ihrem Aufbau im Wesentlichen der Ausführungsform gemäß Fig. 1, jedoch ist die Kühleinrichtung 17 um mehrere im gezeigten Beispiel vertikal übereinander angeordnete Kühlmittelleitungen 23 erweitert. Diese Kühlmittelleitungen 23 werden separat über einzelne Zufuhrleitungen 24 über eine Kühlmittelquelle 25 mit Kühlmittel versorgt. Beispielsweise handelt es sich hier um Wasserkühler, das heißt, durch die Kühlmittelleitungen 23 strömt Wasser. Die Kühlmittelleitungen 23 sind als Ringleitungen um das äußere Verkleidungsrohr 10, in unmittelbarer Anlage an diesem, angeordnet. Infolge der separaten Kühlmittelzufuhr zu den einzelnen Kühlmittelleitungen 23 ist eine Zonenkühlung möglich, das heißt, es kann bei Bedarf nur die eine oder die andere Kühlmittelleitung mit Kühlwasser versorgt werden.

In Verbindung mit den Kühlluftleitungen 18 - die bei dieser Ausführung jedoch optional sind - kann eine sehr gute Kühlung erreicht werden. Diese Ausführung einer erfindungsgemäßen Drainagevorrichtung bietet sich insbesondere zur Verwendung im Bereich der Schmelzwanne, dort im Bereich des Risers, im Färbevorherd hinter der oder den Färbezonen oder aber im Vorherd vor dem Spout an.

Weiterhin zeigt diese Ausgestaltung gemäß Fig. 2 einen Platteneinsatz 26, der in eine entsprechende Ausnehmung an der Heizplatte 15 eingesetzt wird. An diesem Platteneinsatz 26 ist die Durchbrechung 16, deren Querschnitt den maximalen abziehbaren Glasdurchfluss definiert, vorgesehen. Dieser Platteneinsatz 26, der eine Art Düse ist, kann ausgetauscht werden, das heißt, durch Einsetzen eines anderen Platteneinsatzes 26 kann ohne weiteres der maximale Ausnehmungsquerschnitt variiert werden. Es ist also hier nicht die gesamte Heizplatte 15 auszutauschen.

Mit den erfindungsgemäßen Drainagevorrichtungen sind Durchsätze zwischen 0,5 - 5,0 t/d ohne weiteres erreichbar, wobei bei hohen Durchsätzen bevorzugt die Bohrung 5 im Bodenofen mit einer Edelmetallauskleidung vor erhöhtem Verschleiß geschützt werden sollte.

## Patentansprüche

1. Drainagevorrichtung für einen Glasschmelzofen zum Ablassen flüssigen Glases aus einer im Ofenboden vorgesehenen Bohrung, umfassend eine Heizeinrichtung, und eine am Ofenboden (2) anzulegende Heizplatte (15) mit einer In der Montagestellung mit der Bohrung (5) im Ofenboden (2) korrespondierenden Durchbrechung (16), aus der beim Ablassen geschmolzene Glasmasse unmittelbar abtropft, **dadurch gekennzeichnet, dass** die Heizeinrichtung (9) ein der Heizplatte (15) nachgeschaltetes Heizelement (12) in Form eines Widerstandsheizers (13) zum Aufheizen der Helzplatte (15) umfasst.

2. Drainagevorrichtung nach Anspruch 1, **dadurch gekennzeichnet, dass** die Heizplatte (15) eine hochtemperaturbeständige Metallplatte ist.

3. Dralnagevorrichtung nach Anspruch 1 oder 2, **dadurch gekennzeichnet, dass** das Heizelement (12) als schraubenförmige Wendel, durch die das abfließende Glas strömt, ausgebildet ist.

4. Drainagevorrichtung nach einem der vorangehenden Ansprüche, **dadurch gekennzeichnet, dass** das Heizelement (12), insbesondere die Wendel an oder in einem Tragrohr (11), insbesondere einem Keramikrohr gehaltert ist.

5. Drainagevorrichtung nach einem der vorangehenden Ansprüche, **dadurch gekennzeichnet, dass** in der Heizplatte (15) eine Ausnehmung zur Aufnahme eines die Durchbrechung (16) aufweisenden Platteneinsatzes (26) vorgesehen ist.

6. Drainagevorrichtung nach einem der vorangehenden Ansprüche, **dadurch gekennzeichnet, dass** wenigstens eine Kühleinrichtung (17) zum Kühlen der Heizplatte (15) und/oder der Heizeinrichtung (9) vorgesehenen ist.

7. Drainagevorrichtung nach Anspruch 6, **dadurch gekennzeichnet, dass** die Kühleinrichtung (17) eine oder mehrere Kühlluftleitungen (18) umfasst, die die Kühlluft in den Bereich der Heizplatte (15) und/oder der Heizeinrichtung (9) ausblasen.

8. Drainagevorrichtung nach Anspruch 6 oder 7, **dadurch gekennzeichnet, dass** die Kühleinrichtung (17) eine oder mehrere separate, die Heizplatte (15) und/oder die Heizeinrichtung (9) umgreifende Kühlmittelleitungen (23) umfasst.

9. Drainagevorrichtung nach einem der vorangehenden Ansprüche, **dadurch gekennzeichnet, dass** sie ein Traggestell (6) aufweist, über das sie am Ofenboden montierbar ist.

10. Drainagevorrichtung nach Anspruch 9, **dadurch gekennzeichnet, dass** das Traggestell (6) ein oder mehrere Federspannelemente (22) aufweist, über die die Heizeinrichtung (9) samt Heizplatte (15) gegen den Ofenboden spannbar ist.

11. Glasschmelzofen, umfassend eine Drainagevorrichtung (1) nach einem der vorangehenden Ansprüche.

## Claims

1. A drainage device for a glass-smelting furnace for draining liquid glass from a borehole provided in the furnace base, comprising a heating device and a heating plate (15) to be placed on the furnace base (2) with a through-perforation (16) corresponding in the assembled position with the borehole (5) in the furnace base (2), from which molten-glass mass drips directly during the drainage,
**characterised in that**
the heating device (9) comprises a heating element (12) in the form of a resistance heater (13) connected downstream of the heating plate (15) for the heating of the heating plate (15).

2. The drainage device according to claim 1,
**characterised in that**
the heating plate (15) is a high-temperature-resistant metal plate.

3. The drainage device according to claim 1 or 2,
**characterised in that**
the heating element (12) is formed as a screw-shaped spiral, through which the flowing glass flows.

4. The drainage device according to any one of the preceding claims,
**characterised in that**
the heating element (12), especially the spiral, is mounted on or in a mounting tube (11), especially a ceramic tube.

5. The drainage device according to any one of the preceding claims,
**characterised in that**,
in the heating plate (15), a recess is provided for receiving a plate insert (26) providing the through-perforation (16).

6. The drainage device according to any one of the preceding claims,
**characterised in that**
at least one cooling device (17) for cooling the heating plate (15) and/or the heating device (9) is provided.

7. The drainage device according to claim 6,
**characterised in that**
the cooling device (17) provides one or more cooling-air lines (18), which expel the cooling air into the region of the heating plate (15) and/or of the heating device (9).

8. The drainage device according to claim 6 or 7,
**characterised in that**
the cooling device (17) provides one or more separate cooling-medium lines (23) engaging around the heating plate (15) and/or the heating device (9).

9. The drainage device according to any one of the preceding claims,
**characterised in that**
it provides a mounting frame (6), by means of which it can be mounted on the furnace base.

10. The drainage device according to claim 9,
**characterised in that**
the mounting frame (6) provides one or more spring-clamping elements (22), by means of which the heating device (9) together with the heating plate (15) can be clamped against the furnace base.

11. A glass-smelting furnace, comprising a drainage device (1) according to any one of the preceding claims.

## Revendications

1. Ouvreau de fond pour un four de verrerie destiné à évacuer du verre liquide d'un trou prévu dans le fond du four, comprenant un dispositif de chauffage et une plaque de chauffage (15) à placer sur le fond du four (2) avec un percement (16) correspondant, dans la position de montage, au trou (5) dans le fond du four (2), percement duquel s'écoule directement goutte à goutte la masse de verre fondu lors de l'évacuation, **caractérisé en ce que** le dispositif de chauffage (9) comprend un élément de chauffage (12) monté en aval de la plaque de chauffage (15) sous la forme d'un dispositif de chauffage à résistance (13) pour l'échauffement de la plaque de chauffage (15).

2. Ouvreau de fond selon la revendication 1, **caractérisé en ce que** la plaque de chauffage (15) est une plaque métallique résistant aux températures élevées.

3. Ouvreau de fond selon la revendication 1 ou 2, **caractérisé en ce que** l'élément de chauffage (12) est conçu sous forme de filament hélicoïdal, par lequel circule le verre qui s'évacue.

4. Ouvreau de fond selon l'une des revendications précédentes, **caractérisé en ce que** l'élément de chauffage (12), en particulier le filament est monté sur ou dans un tuyau support (11), en particulier un tuyau céramique.

5. Ouvreau de fond selon l'une des revendications précédentes, **caractérisé en ce qu'**un évidement destiné au logement d'un insert de plaque (26) présentant le percement (16) est prévu dans la plaque de chauffage (15).

6. Ouvreau de fond selon l'une des revendications précédentes, **caractérisé en ce qu'**au moins un dispositif de refroidissement (17) est prévu pour le refroidissement de la plaque de chauffage (15) et/ou du dispositif de chauffage (9).

7. Ouvreau de fond selon la revendication 6, **caractérisé en ce que** le dispositif de refroidissement (17) comprend une ou plusieurs conduites d'air de refroidissement (18), qui évacuent par soufflage l'air de refroidissement dans la zone de la plaque de chauffage (15) et/ou du dispositif de chauffage (9).

8. Ouvreau de fond selon la revendication 6 ou 7, **caractérisé en ce que** le dispositif de refroidissement (17) comprend une ou plusieurs conduites d'agent de refroidissement (23) séparées, entourant la plaque de chauffage (15) et/ou le dispositif de chauffage (9).

9. Ouvreau de fond selon l'une des revendications précédentes, **caractérisé en ce qu'**il présente un bâti support (6), au moyen duquel il peut être monté sur le fond du four.

10. Ouvreau de fond selon la revendication 9, **caractérisé en ce que** le bâti support (6) présente un ou plusieurs éléments tendeurs de ressort (22), par lesquels le dispositif de chauffage (9) peut être tendu avec la plaque de chauffage (15) contre le fond du four.

11. Four de verrerie, comprenant un ouvreau de fond (1) selon l'une des revendications précédentes.
